# EUROPEAN PATENT SPECIFICATION

(11) **EP 1 997 292 B1**
(45) Date of publication and mention of the grant of the patent: **07.11.2018**
(21) Application number: 07712913.8
(22) Date of filing: 16.03.2007
(51) Int. Cl.: H04W 12/04, H04W 12/06, H04L 9/32, H04L 29/06

(54) **ESTABLISHING COMMUNICATIONS**
HERSTELLUNG DER KOMMUNIKATION
PROCÉDÉ PERMETTANT D'ÉTABLIR DES COMMUNICATIONS

(30) Priority: 20.03.2006 EP 06251459
(43) Date of publication of application: 03.12.2008
(73) Proprietor: British Telecommunications public limited company, London EC1A 7AJ (GB)
(72) Inventor: NIJDAM, Mark, Johannes, Suffolk IP1 1XF (GB)
(74) Representative: British Telecommunications public limited company Intellectual Property Department
(86) International application number: PCT/GB2007/000922
(87) International publication number: WO 2007/107708

(56) References cited:
- EP-A- 1 458 151
- EP-A- 1 650 915
- WO-A-2006/067281
- US-A1- 2003 026 433
- JUHA ALA-LAURILA ET AL: "Wireless LAN Access Network Architecture for Mobile Operators" IEEE COMMUNICATIONS MAGAZINE, IEEE SERVICE CENTER, PISCATAWAY, US, vol. 39, no. 11, November 2001 (2001-11), pages 82-89, XP011091839 ISSN: 0163-6804
- MARC DANZEISEN, TORSTEN BRAUN, DANIEL RODELLAR, SIMON WINIKER: "Heterogeneous network establishment assisted by cellular operators" THE FIFTH IFIP TC6 INTERNATIONAL CONFERENCE ON MOBILE AND WIRELESS COMMUNICATIONS NETWORKS (MWCN'03), [Online] 27 October 2003 (2003-10-27), page 29.10.2003, XP002455103 Singapore Retrieved from the Internet: URL:http://www.iam.unibe.ch/~rvs/research/ publications/mwcn03.pdf> [retrieved on 2007-10-15]
- DANZEISEN M ET AL: "Implementation of a cellular framework for spontaneous network establishment" 2005 IEEE WIRELESS COMMUNICATIONS AND NETWORKING CONFERENCE (IEEE CAT. NO.05TH8794) IEEE PISCATAWAY, NJ, USA, [Online] vol. 3, 2005, pages 1683-1689 Vol., XP002455104 ISBN: 0-7803-8966-2 Retrieved from the Internet: URL:http://ieeexplore.ieee.org/> [retrieved on 2007-10-15]
- MENEZES A J ET AL: "Handbook of Applied Cryptography, key establishment protocols" HANDBOOK OF APPLIED CRYPTOGRAPHY, CRC PRESS SERIES ON DISCRETE MATHEMATICES AND ITS APPLICATIONS, BOCA RATON, FL, CRC PRESS, US, 1997, pages 489-508, XP002283799 ISBN: 0-8493-8523-7
- MENEZES A ET AL: "Handbook of applied cryptography , PASSAGE" HANDBOOK OF APPLIED CRYPTOGRAPHY, CRC PRESS SERIES ON DISCRETE MATHEMATICES AND ITS APPLICATIONS, BOCA RATON, FL, CRC PRESS, US, 1997, page 1,549,550, XP002250236 ISBN: 0-8493-8523-7
- BLUNK J VOLLBRECHT MERIT NETWORK L ET AL: "PPP Extensible Authentication Protocol (EAP); rfc2284.txt" IETF STANDARD, INTERNET ENGINEERING TASK FORCE, IETF, CH, March 1998 (1998-03), XP015008068 ISSN: 0000-0003

## Description

The present invention relates to a method of establishing direct and secure communications between two wireless communications devices.

There are two ways for wireless devices (or nodes) in a WiFi wireless network to communicate with each other: infrastructure mode and ad-hoc mode.

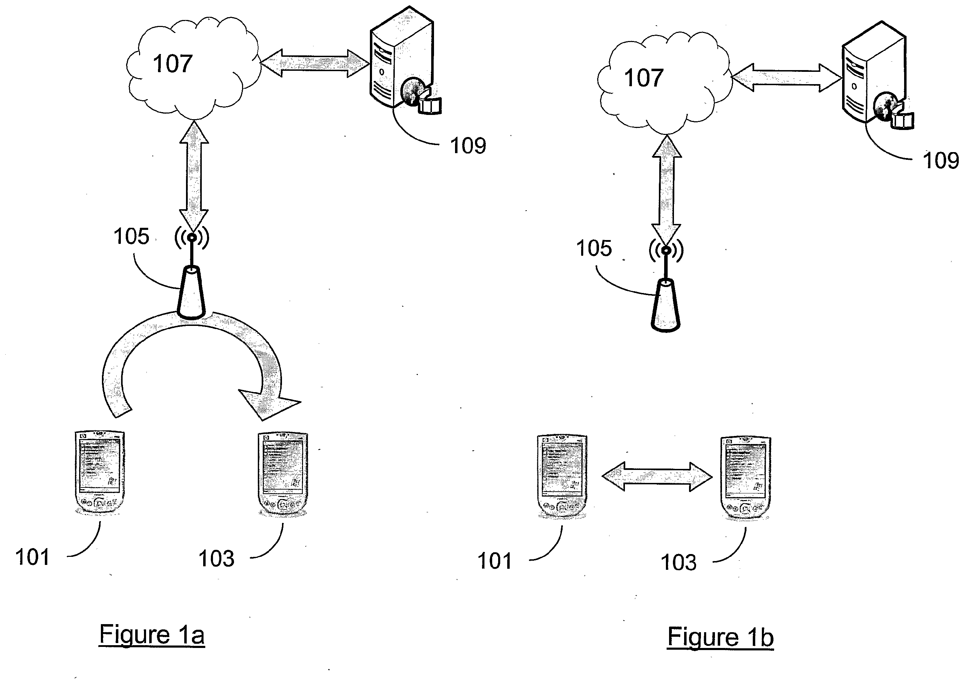

Referring to figure 1a, in infrastructure mode, communications between wireless node A 101 and wireless node B 103 (e.g. WiFi enabled personal digital assistants (PDA) like the iPAQ HX 2790 available from Hewlett-Packard Company, California, USA) are routed through a fixed infrastructure. Having pre-registered for wireless internet access with an appropriate service provider (e.g. the BT Openzone service operated by British Telecommunications plc), node A 101 and node B 103 can each access internet 107 via a wireless access point (or hotspot) 105, gain authentication from authentication server 109 and then communicate with each other via the fixed infrastructure - for example via an e-mail server connected to the Internet.

However, transmissions via an infrastructure (i.e. long range transmissions) are very power consuming and most wireless handheld devices have limited battery life. Also, long range transmissions can cause interference between devices competing to access the same or adjacent access points.

Referring now to figure 1b, ad-hoc mode is an alternative to infrastructure mode. In ad-hoc mode, node A 101 and node B 103 can communicate directly with each other and it is not necessary for the wireless communication to be routed through the fixed infrastructure of access point 105 and internet 107. Ad-hoc mode has several advantages compared to infrastructure mode: low power short range transmissions, directly between two devices are more energy efficient. They also reduce interference and consequently increase the throughput.

When communicating in ad-hoc mode, node A 101 and node B 103 will want to ensure that their communications are confidential and secure. This requires the use of encryption keys to encrypt the communications that pass between them.

There are two ways of providing encryption: asymmetric cryptography and symmetric cryptography.

In asymmetric cryptography, in order to send a secure communication to node B 103, node A 101 would encrypt the data using the public key of node B 103, which node B 103 makes freely available to anyone. Decryption of the communication using the public key is not possible. Upon receiving the communication, node B 103 would use its secret private key to decrypt the data. However, asymmetric cryptography is computationally complex and is not suitable for most wireless handheld mobile devices which have limited battery life and processing power. Furthermore, node B 103 might also change public key and hence the validity of the public key needs to be checked and this requires connectivity to an appropriate Certificate Authority; something which is not always guaranteed.

In symmetric cryptography, encryption and decryption of data is carried out with the same encryption key. Symmetric cryptography can be up to one thousand times faster than asymmetric cryptography and does not require validation from a third party. Symmetric cryptography is therefore more appropriate than asymmetric cryptography for use in the resource lean environment of handheld devices.

However, the symmetric encryption key has to be pre-shared by all those who wish to communicate securely and then a copy of the key is held by each party making it more susceptible to discovery by a cryptographic adversary. Therefore, the symmetric key needs to be changed often and kept secure during distribution and in service.

In order to enable symmetric encryption, both parties need to use the same encryption key. As explained in Chapter 12 of the "Handbook of Applied Cryptography", authored by A. Menezes et al, this can either be done by having one party generate the key and send it to the other party (key transport), or by having each party derive a key with actually transmitting the key between them (key agreement). Often, each party to the communication will want to be sure of the identity of the person they are communicating with. There are many protocols which offer both key exchange and mutual authentication. Examples include Wide-Mouth Frog, Yahalom, Needham-Schroeder, Otway-Rees, Kerberos and many more. US Patent application 2003/0026433 discloses yet another key establishment protocol.

Many of the above key exchange and mutual authentiction protocol utilise Key distribution centres (KDC) to reduce the risks inherent in the distribution/exchange of encryption keys. However, access to a KDC is not always possible and either node A 101 or node B 103 or both may not have a subscription/account with a KDC. Furthermore, the nodes have to trust their KDC.

Wi-Fi network providers provide users with access to the Internet in return for a fee. In order to do this, they create an account for that customer and obtain some billing details from them. At the same time as doing this they provide the customer with some sort of credential which he can present to convince them that he is seeking access to the network, and not someone else.

When the user subsequently seeks access to the network, he presents the credential provided by the network operator in order to authenticate himself. The credential is checked against the Wi-Fi provider's records, and access to the Internet is granted if the customer is recognised as a legitimate customer.

According to a first aspect of the present invention, there is provided a method of establishing direct and secure communication between two wireless communications devices , said method comprising the steps of:
(i) sending a communication request message directly from a first wireless communications device to a second wireless communications device;
(ii) operating one of said wireless communications devices to request a symmetric encryption key from an authentication server ;
(iii) responsive to said request. operating said authentication server to:
   authenticate said one of said wireless communications devices on the basis of a trust relationship;
   generate said symmetric encryption key on successful authentication of said one of said wireless communications devices ; and
   send said symmetric encryption key to said one of said wireless communications devices ;
(iv) responsive to receiving said symmetric encryption key, storing said symmetric encryption key at said one of said wireless communications devices and communicating it directly to the other wireless communications device ;
(v) securing direct communications between said wireless communications devices using said symmetric encryption key ;
said method being characterised by:
each of said wireless communications devices being capable of both direct and fixed network-infrastructure-mediated communication; and
said authentication server comprising a network authentication server and being further operable to permit or deny use of said fixed network infrastructure on the basis of said trust relationship.

By using an authentication server, which is already operable to authenticate access to a communications network, to generate the symmetric encryption key that is to be used to secure direct communications between two wireless communication devices, the wireless communication devices can communicate securely in an ad-hoc manner. The first and second wireless nodes need not have established any prior trust between themselves and hence secure communications can be provided between two nodes that have never met.

The first and second wireless nodes can move out of reach of a network infrastructure and still maintain a secure connection.

Neither the first nor the second wireless nodes need a subscription/account with a KDC. The first and second wireless nodes already have an existing trust relationship with an authentication service and hence an additional trust relationship with another third party (e.g. a KDC) does not need to be established. The existing trust between the first wireless node and an authentication service and between the second wireless node and an authentication service is re-used and no new credentials are required.

Furthermore, the shared secret (symmetric encryption key) can be used for higher layer security, like IP Security (IPsec) or secure routing security. Use of a shared secret in IPsec makes it possible to maintain secure communications even when there is no direct link layer connectivity between the two nodes.

In preferred embodiments, the one of said wireless communication devices comprises said second wireless communications device and step (iii) additionally comprises operating the authentication server to authenticate the first and second wireless communication devices and to generate the symmetric encryption key on successful authentication of the first and second wireless communications devices.

In such preferred embodiments, the existing trust relationships are established by the first wireless device sharing a first secret with an authentication server and the second wireless device sharing a second secret with an authentication server, and said communication request message includes first data encrypted with the first secret, wherein step (ii) comprises sending data encrypted with the second secret together with the encrypted first data to the authentication server, and further comprises the authentication server authenticating the first and second wireless devices by decrypting the encrypted first and second data using the first and second shared secrets respectively. The secret preferably comprises a password known only to the authentication service and the relevant wireless communications device.

In preferred embodiments, the second wireless communications device has an existing trust relationship with the authentication server and the first wireless communications device has an existing trust relationship with a further authentication server; wherein the authenticating step comprises the authentication server and the further authentication server authenticating the second wireless communications device and the first wireless communications device respectively on the basis of the existing trust relationships. In this way, the first and second wireless nodes can communicate securely in an ad-hoc manner even if they do not have an existing trust relationship with the same authentication server.

In alternative embodiments, the one of said wireless communication devices comprises said first wireless communications device.

In preferred embodiments, the first and second wireless communications devices comprise WiFi enabled communications terminals. Examples of such terminals include WiFi enabled laptop or palmtop computers, PDAs, mobile telephones, smartphones etc.

Preferably, the authentication server is operable to authenticate access to said communications network via a wireless access point, the method further comprising the second wireless communications device accessing the authentication server via the wireless access point. In this way, the second wireless communications device communicates briefly with the fixed infrastructure via an access point in order to obtain the symmetric keys required to encrypt the ad-hoc communications between the two devices

In preferred embodiments, the first and second wireless communications devices have an existing trust relationship with the same authentication server. In this way, it is not necessary for the authentication server to have a roaming agreement or secure connection with any other authentication servers.

In preferred embodiments, the symmetric encryption key is used to derive a further encryption key and the further encryption key is used to secure direct communications between said first and second wireless communications devices. In this way, a symmetric key that is known only to the first and second wireless communications devices is used to secure the communications between the two devices (rather than a key that is also known to the authentication server that generated it).

Preferably, the authentication server comprises a home authentication server and the second wireless communications device accesses the home authentication server via a visited authentication server. In this way, the second wireless communications device need not be within range of an access point provided by the communications network provider that provides an authentication server to the second wireless communications device. Instead, the second wireless communications device could use any access point to gain access to the communications network and still obtain the required symmetric key from its home authentication server.

According to a second aspect of the present invention, there is provided a wireless communications device comprising:
message receiving means arranged in operation to receive a communication request message directly from a further wireless communications device , said communication request message requesting the establishment of direct communication with said further wireless communications device ;
storage means arranged in operation to store a received symmetric encryption key ;
key transmission means arranged in operation to send said symmetric encryption key directly to said further wireless communications device ;
communication transmission means arranged in operation to send communications secured with said symmetric encryption key directly to said further wireless communications device ;
said wireless communications device being characterised by:
being capable of both direct and fixed network-infrastructure-mediated communication and having a trust relationship with a network authentication server, said network authentication server being operable to permit or deny use of said network infrastructure by said wireless communications device;
request means arranged in operation to request said symmetric encryption key from said network authentication server;
key receiving means arranged in operation to receive said symmetric encryption key from said network authentication server .

According to a third aspect of the present invention, there is provided an authentication server comprising:
request receiving means arranged in operation to receive a request from a wireless communications device for a symmetric encryption key to be used in securing direct communications between said wireless communications device and a further wireless communications device ;
authenticating means arranged in operation to authenticate said wireless communications device ;
key generation means arranged in operation to generate said symmetric encryption key in dependence on a successful authentication of said wireless communications device ;
key transmission means arranged in operation to transmit said symmetric encryption key to said wireless communications device;
said authentication server being characterised by comprising a network authentication server arranged in operation to control use of a communications network infrastructure by wireless communication devices; and
said request receiving means being arranged in operation to receive said request for a symmetric encryption key from a wireless communications device capable of both direct and network-infrastructure-mediated communication.

Preferably, the authenticating means is further arranged in operation to authenticate the further wireless communications device: wherein the key generation means is arranged in operation to generate the symmetric encryption key in dependence on a successful authentication of the wireless communications device and the further wireless communications device.

In preferred embodiments, the request receiving means is arranged in operation to receive a request originating from the wireless communications device via a further authentication server. In this way, the wireless communications device need not be within range of an access point provided by the communications network provider that provides the authentication server to the second wireless communications device. Instead, the wireless communications device could use any access point to gain access to the communications network and still obtain the required symmetric key from the authentication server.

In alternative embodiments, the authentication server has an existing trust relationship with the wireless communications device and the further wireless communications device; wherein the authenticating means is arranged in operation to authenticate the wireless communications device and the further wireless communications device on the basis of the existing trust relationships. In this way, it is not necessary for the authentication server to have a roaming agreement or secure connection with any other authentication servers.

Embodiments of the present invention will now be described, by way of example only, with reference to the accompanying drawings, wherein like reference numbers refer to like parts, and in which:
Figure 1a is a block diagram showing two WiFi devices communicating with each other via a fixed infrastructure;
Figure 1b is a block diagram showing two WiFi devices communicating directly with each other in ad-hoc mode;
Figure 2 is a block diagram showing an IEEE 802.1X framework according to an embodiment of the present invention.
Figure 3 is a sequence diagram showing part of the method of establishing direct communication between two wireless nodes according to an embodiment of the present invention;
Figure 4 is a further sequence diagram showing a further part of the method of establishing direct communication between two wireless nodes according to an embodiment of the present invention;
Figure 5 is a diagram showing a message flow between two wireless nodes during the establishment of direct communication between themselves according to an embodiment of the present invention;
Figure 6 is a diagram showing a message flow between a wireless node and an authentication server during the establishment of direct communication between two wireless nodes according to an embodiment of the present invention;
Figure 7 is a diagram showing a message flow between an authentication server and a wireless node during the establishment of direct communication between two wireless nodes according to an embodiment of the present invention;
Figure 8 is a diagram showing the generation of an authentication challenge by a wireless node during the establishment of direct communication between itself and another wireless node according to an embodiment of the present invention;
Figure 9 is a diagram showing a message flow between two wireless nodes during the establishment of direct communication between themselves according to an embodiment of the present invention;
Figure 10 is a diagram showing the generation of an authentication challenge by a wireless node during the establishment of direct communication between itself and another wireless node according to an embodiment of the present invention;
Figure 11 is a diagram showing a message flow between two wireless nodes during the establishment of direct communication between themselves according to an embodiment of the present invention;
Figures 12a and 12b are block diagrams showing the conventional IEEE 802.1X framework;
Figure 13 is a diagram showing message flows between two wireless nodes and two authentication servers according to a further embodiment of the present invention.

WiFi is a set of product compatibility standards for wireless local area networks (WLAN) based on the IEEE 802.11 specifications. WiFi enables a person with a wireless-enabled device (e.g. wireless enabled computer, mobile phone, personal digital assistant (PDA) etc.) to connect to the Internet when in proximity of a wireless access point.

IEEE 802.11i is an amendment to the 802.11 standard specifying security mechanisms for WiFi networks. IEEE 802.1X is a standard for port-based Network Admission Control and is based on the Extensible Authentication Protocol (EAP), which is specified in Request for Comment (RFC) 2284 of the Internet Engineering Task Force. EAP is a universal authentication mechanism that is used in wireless networks. EAP is an authentication framework, not a specific authentication mechanism. The EAP provides some common functions and a negotiation of the desired authentication mechanism. Such mechanisms are called EAP methods.

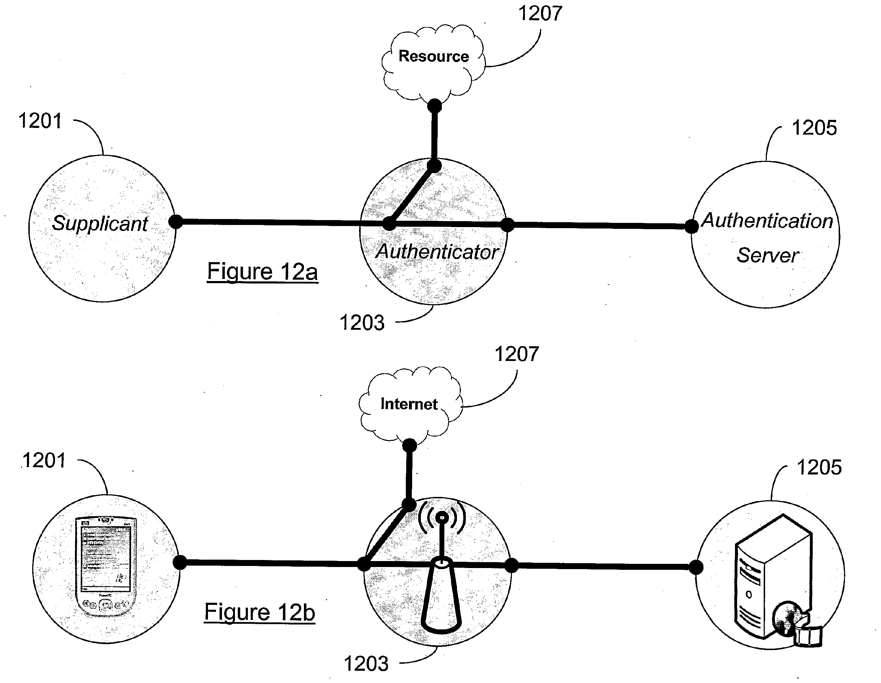

Referring to figure 12a, the 802.1X framework makes use of three entities: supplicant 1201, authenticator 1203 and authentication server 1205. The supplicant 1201 requires access to a resource 1207. The supplicant 1201 has an identity and some credentials to prove that it is who it claims to be. The supplicant 1201 can be connected to the resource 1207 through a port of an authenticator 1203 that is access controlled. The authenticator 1203 does not know whether the supplicant 1201 can be allowed access. Rather, that is the function of the authentication server 1205 which performs an authentication based on the supplicant's credentials and decides whether authentication is a success or a failure. After a successful authentication of the supplicant 1201 by the authentication server 1205 through the authenticator 1203, a controlled port is unblocked granting the supplicant 1201 access to resource 1207 of authenticator 1203. In Wi-Fi, supplicant 1201 could comprise a WiFi enabled, handheld device, resource 1207 could comprise the sending and receiving of data packets over the internet and authenticator 1203 could comprise an access point, as shown in figure 12b.

In the following description of the present invention, two users using handheld devices (node A 101 and node B 103) would like to communicate wirelessly in ad-hoc mode to exchange data. Securing the communication channel between the two nodes is achieved using a trusted third party - authentication server 109. However, instead of all transmissions being directed through the fixed infrastructure (as in infrastructure mode), one of the devices communicates briefly with the fixed infrastructure (e.g. via access point 105) in order to obtain the symmetric keys required to encrypt the ad-hoc communications between the two devices (e.g. from authentication server 109 over internet 107). Once the keys are obtained, the two devices are able to communicate with each other directly (in ad-hoc mode) and do not need to be in range of a fixed WiFi infrastructure.

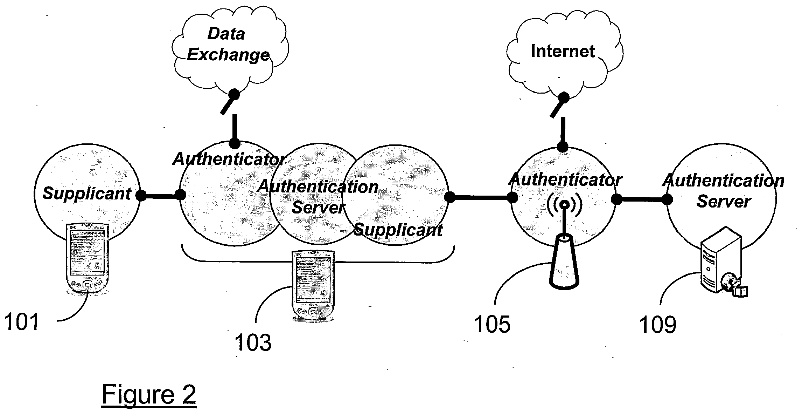

The conventional 802.1X framework for port-based network access control (as described in relation to figures 12a and 12b) is, however, no longer appropriate since there are now four entities: ad-hoc node A 101, ad-hoc node B 103, access point 105 (authenticator) and authentication server 109. The present invention makes use of the 802.1X framework in a novel and inventive way as shown in figure 2. One of the WiFi nodes (node B 103 in this example) acts as supplicant where it receives symmetric encryption keys from authentication server 109 via access point 105 (acting as authenticator). Additionally, node B 103 acts as a temporary authentication server and authenticator in order to authenticate node A 101 (acting as supplicant).

It is assumed that no prior trust has been established between node A 101 and node B 103. However, it is assumed that node A 101 and node B 103 have independently established prior trust with authentication server 109. This is achieved by node A 101 pre-sharing a secret symmetric encryption key (A.S) with the authentication server 109 and node B 103 pre-sharing a different secret symmetric encryption key (B.S) with authentication server 109. For example, when node A 101 and node B 103 first register with a service provider for wireless internet access they set up a username and password for future use. The passwords would then comprise secrets A.S and B.S.

When the users of node A 101 and node B 103 decide that they want to communicate in ad-hoc mode, it is first necessary to establish link layer connectivity (i.e. set up a WiFi link) between the nodes. This is achieved according to the association process of the 802.11 standard whereby node A 101 sends an association request message to node B 103, which accepts the message by responding with an association response message.

Once link layer connectivity has been established between node A 101 and node B 103 the process of establishing the symmetric, ad-hoc, encryption key can be performed.

Like in the conventional IEEE 802.1X framework, the present invention is based on EAP. EAP is built around the challenge-response paradigm; there are four types of EAP message: EAP-request, EAP-response, EAP-success and EAP-failure. The EAP over LAN (EAPOL) protocol is used to encapsulate the EAP messages and carry them between supplicant and authenticator. The EAP methods described below make use of the Otway-Rees key establishment protocol (D. Otway & O. Rees, "Efficient and timely mutual authentication", Operating Systems Review, 21(1):8-10, 1987).

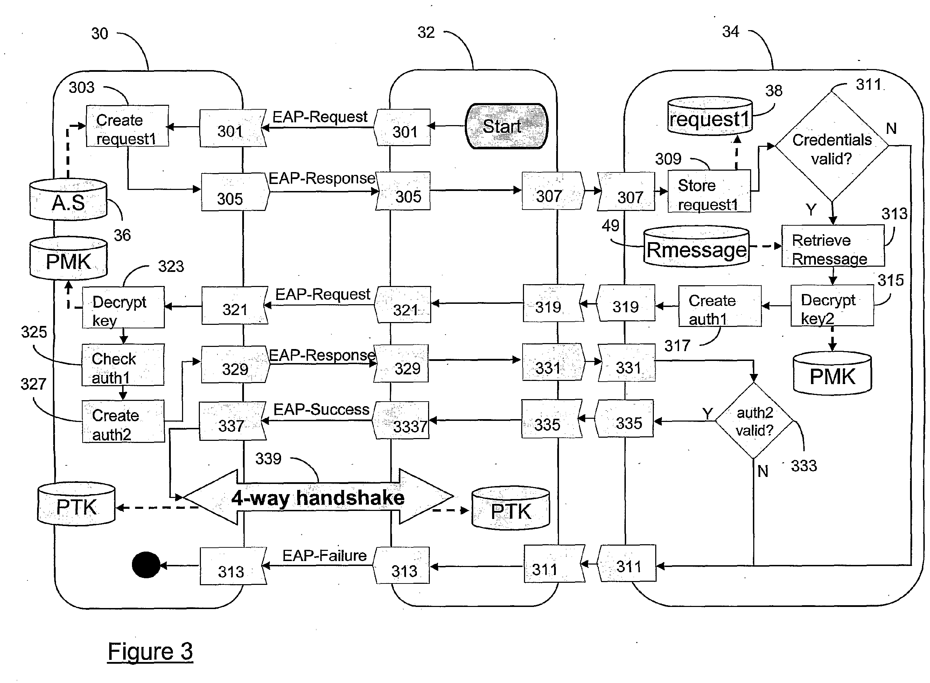

Referring now to figure 3, three port access entities (PAE) take part in this instance of EAP: a supplicant PAE 30, authenticator PAE 32 and an authentication server PAE 34. (A PAE is a logical entity that supports the IEEE 802.1X protocol and that is associated with a port.) In this instance of EAP, the supplicant PAE 30 is located on node A 101. It will be remembered that node B 103 acts as a temporary authentication server and authenticator in order to authenticate node A 101. Hence, in this instance of EAP, the authenticator PAE 32 and authentication server PAE 34 are both located on node B 103.

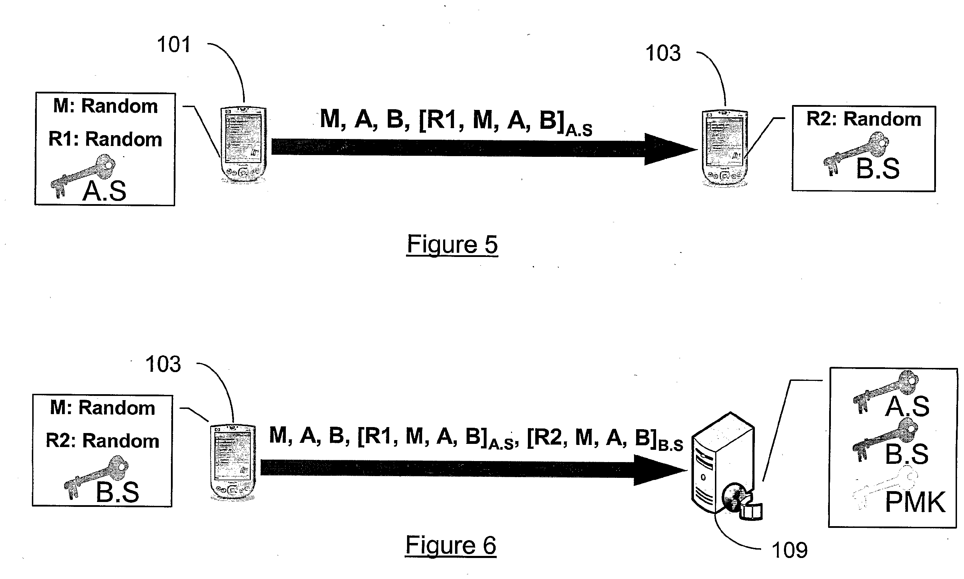

The IEEE 802.11i architecture specifies that the authenticator PAE 32 initiates an EAP method after successfully establishing link layer connectivity with the supplicant PAE30 and hence in step 301, the authenticator, PAE 32 sends an EAP-request message to the supplicant PAE 30 of the type APSS1 (a new type of EAP message). The supplicant PAE 30 receives the message and in response creates a request message request1 (step 303) comprising a random number M, the identities A and B of both communicating peers (node A 101 and node B 103) and a cipher text produced by encrypting a random number R1, random number M and identities A and B with secret A.S 36. It will be remembered that A.S 36 is a pre-shared secret that node A 101 shares with authentication server 109. Random number M is used by the authentication server 109 and its use thereby will be described in more detail below. Random number R1 is used by node A 101 and node B 103 and its use thereby will also be described in more detail below. The encryption algorithm can be either fixed (e.g. RC4) or negotiated using an optional EAP-request of existing type Identity. The supplicant PAE 30 sends the message request1 (step 305) to the authenticator PAE 32 using an EAP-response message of type EAP-APSS1, as shown in figure 5. This corresponds to the first message in the Otway-Rees protocol.

The authenticator PAE 32 only has a translation role - it encapsulates EAP-request and EAP-response messages into the protocol messages of the specific authentication server PAE 34 and vice versa. Upon receiving the EAP-response message, authenticator PAE 32 translates the message and sends it (step 307) to the authentication server PAE 34. Since both authenticator PAE 32 and authentication server 34 PAE are located on node B 103, this message comprises an internal message within node B 103.

Upon receiving the translated EAP-response message, authentication server PAE 34 stores the key request message request1 in a data store 38 for use later (step 309).

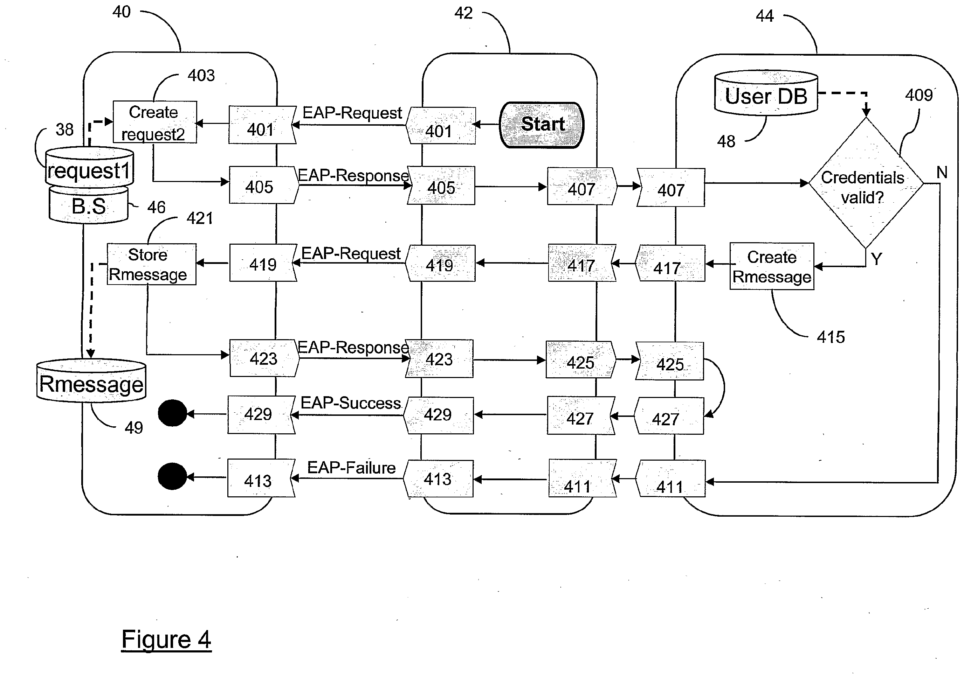

Authentication server PAE 34 then checks the validity of the credentials received (request1) from the supplicant PAE 30 (step 311). However, it will be remembered that node B 103 acts as a temporary authentication server in order to authenticate node A 101. The temporary authentication server is not able to make the authentication decision on its own because it does not know the secret A.S that node A 101 shared with authentication server 109. Therefore, in the present invention, the check carried out by the authentication server PAE 34 (step 311) comprises a further instance of EAP, which will now be described in relation to figure 4.

Referring to figure 4, three PAEs take part in this second instance of EAP: a supplicant PAE 40, authenticator PAE 42 and an authentication server PAE 44. Supplicant PAE 40 is now located on node B 103, authenticator PAE 42 is located on access point 105 and authentication server PAE 44 is located on authentication server 109. A secure connection is assumed to exist between authenticator PAE 42 and authentication server PAE 44. For example, this could be established by access point 105 using IP Security (IPsec).

Like before, it is first necessary to establish link layer connectivity (i.e. set up a WiFi link) between node B 103 and access point 105 and this is achieved according to the association process of the 802.11 standard whereby node B 103 sends an association request message to access point 105, which accepts the message by responding with an association response message.

In the present embodiment, in order for node B 103 to have two link layer associations at the same time node B 103 could be equipped with two wireless network cards. Alternatively, additional software like that described in *"*MultiNet: Connecting to Multiple IEEE 802.11 Networks Using a Single Wireless Card", Chandra, R., Bahl, P. & Bahl, P., IEEE Infocom, Hong Kong, March 2004*,* is used. The software enables the virtualisation of the wireless card of node B 103 by introducing an intermediate layer between the link and network layers which continuously switches the card across multiple networks and keeps track of the state of all the individual associations.

Once link layer connectivity has been established between node B 103 and access point 105, the authenticator PAE 42 starts by sending an EAP-request message (step 401) to the supplicant PAE 40 of type EAP-APSS2 (a further new type of EAP message).

Upon receiving the EAP-request message, the supplicant PAE 40 creates another request message request2 (step 403) comprising random number M, the identities A and B, request1 (available from data store 38) and a cipher text produced by encrypting a random number R2, random number M and identities A and B with secret B.S 36. It will be remembered that B.S 46 is a pre-shared secret that node B 103 shares with authentication server 109. Request message request2 is then sent to the authenticator PAE 42 (step 405) in an EAP-response frame of type EAP-APSS2. The authenticator PAE 42 translates the request message request2 into a protocol specific message of authentication server PAE 44 and sends the translated message (step 407) to authentication server PAE 44, as shown in figure 6. This corresponds to the second message in the Otway-Rees protocol.

The authentication server PAE 44 checks the credentials (step 409) from both node A 101 and node B. 103 (using pre-shared secrets A.S 36 and B.S 46 (which are stored in user database 48) to check if the values of A, B and M in the two request messages making up request2 are the same).

If the credentials are not valid, the authentication server PAE 44 sends back a response (step 411) to the authenticator PAE 42 based on the invalidity of the credentials. The authenticator PAE 42 translates the response and sends it on to the supplicant PAE 40 in an EAP-failure message (step 413).

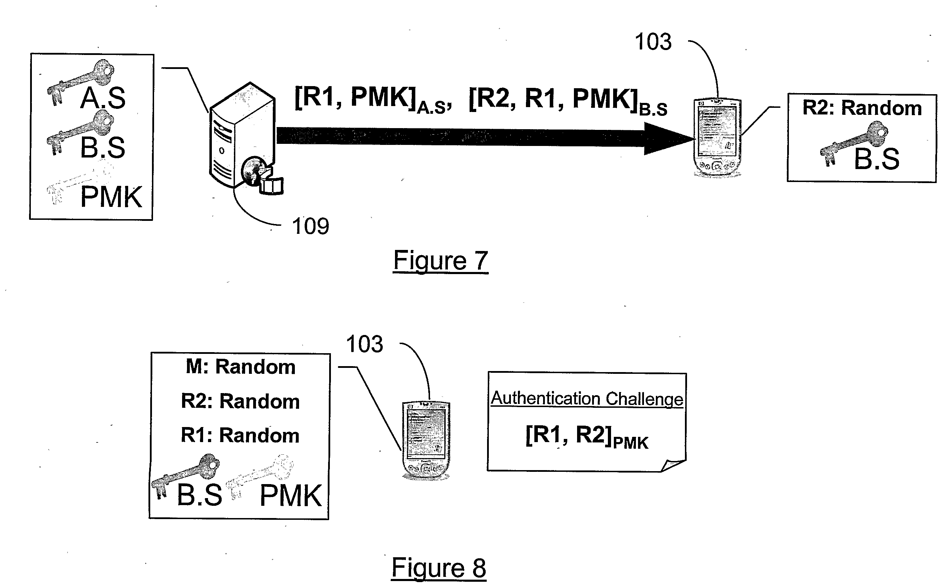

If the credentials are valid, the authentication server PAE 44 generates a symmetric, ad-hoc, encryption key PMK (Pairwise Master Key in IEEE 802.11 terminology) for both node A 101 and node B 103. The two instances of PMK are encrypted to form two key messages, key1 and key2. Key message key1 comprises an encryption of random number R1 and the symmetric, ad-hoc, encryption key PMK with secret A.S 36. Key message key2 comprises an encryption of random number R2, random number R1 and the symmetric, ad-hoc, encryption key PMK with secret B.S 46. The inclusion of random numbers R1 and R2 will later prove that authentication server PAE 44 created encryption key PMK. The two key messages are used to create a response message Rmessage (step 415), which is sent from authentication server PAE 44 to authenticator PAE 42. The authenticator PAE 42 translates the response message Rmessage and sends it on to the supplicant PAE 40 in an EAP-request message of the type EAP-APSS2, as shown in figure 7. This corresponds to the third message in the Otway-Rees protocol.

Upon receiving the EAP-request message, the supplicant PAE 40 stores request message Rmessage (step 421) in a data store 49 for use later.

In order to confirm receipt of the latest EAP-request message, the supplicant PAE 40 sends (step 423) an empty EAP-response frame of type EAP-APSS2 to the authenticator PAE 42. The authenticator PAE 42 again translates the message and sends it to the authentication server PAE 44. The authentication server PAE 44 knows that the second EAP instance has been successful when it receives this message and responds by sending an EAP-success message via authenticator PAE 42 (step 427) to the supplicant PAE 40 (step 429). At this stage, the second EAP instance finishes.

Referring once again to figure 3, it will be remembered that in step 311, the authentication server PAE 34 checks the validity of the ticket received from the supplicant PAE 30 and that this check comprised a further instance of EAP, which has just been described in relation to figure 4.

If this instance of EAP resulted in an EAP-failure message being received by supplicant PAE 40 (figure 4, step 413), the authentication check is deemed to have failed (the credentials are invalid). In this situation, the authentication server PAE 34 sends back a response (step 311) to the authenticator PAE 32 based on the invalidity of the credentials. The authenticator PAE 32 translates the response and sends it on to the supplicant PAE 30 in an EAP-failure message (step 313).

If this instance of EAP resulted in an EAP-success message being received by supplicant PAE 40 (figure 4, step 429), the authentication check is deemed to have been successful (the credentials are valid). In this situation, the authentication server PAE 34 retrieves the Rmessage from data store 49 (step 313), extracts key message key2, decrypts it using secret B.S 46 (step 315) to obtain encryption key PMK and stores encryption key PMK. It will be remembered that key message key2 also contains random numbers R1 and R2. The presence of R2 proves that key message key2 (and thus encryption key PMK) originated from authentication server 109.

Then authentication server PAE 34 creates authentication challenge auth1 (step 317) which is used by node B 103 to prove to node A 101 that it also possesses encryption key PMK. It comprises random number R1 and random number R2 encrypted with the symmetric, ad-hoc, encryption key PMK, as shown in figure 8.

Key message key1 (which is will be remembered was part of Rmessage retrieved in step 313) and authentication challenge auth1 are then sent by the authentication server PAE 34 to the authenticator PAE 32 (step 319). Since both authenticator PAE 32 and authentication server 34 PAE are located on node B 103, this message again comprises an internal message within node B 103.

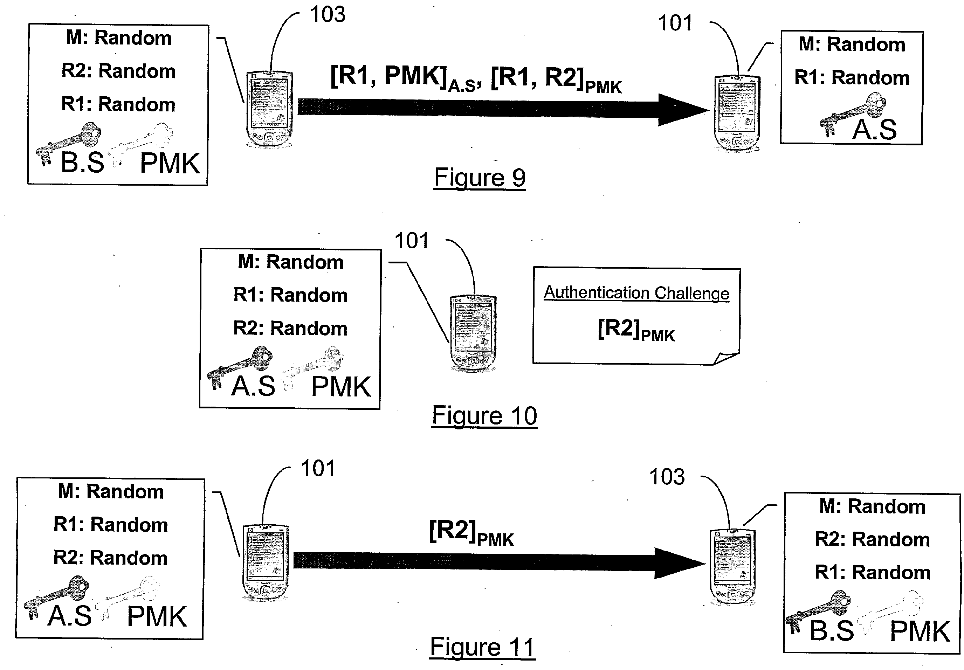

The authenticator PAE 32 translates the message and sends it (step 321) on to the supplicant PAE 30 in an EAP-request message of the type EAP-APSS1, as shown in figure 9. This corresponds to the fourth message in the Otway-Rees protocol but with authentication challenge auth1 added to the message.

The supplicant PAE 30 decrypts key message key1 (step 323) using secret A.S 36 and stores encryption key PMK. It will be remembered that key message key1 also contains random number R1. Its presence proves that key message key1 (and thus encryption key PMK) originated from authentication server 109.
Then supplicant PAE 30 checks authorisation challenge auth1 for validity (step 325). It will be remembered that authentication challenge auth1 contains random numbers R1 and R2. The presence of random number R1 proves to node A 101 that node B 103 has possession of encryption key PMK and therefore that node B 103 was successfully authenticated by authentication server 109.

If the authentication challenge is deemed to be valid (i.e. it contained random number R1), the supplicant PAE 30 creates an authentication challenge auth2 (step 327) for node B 103 comprising random number R2 encrypted with the symmetric, ad-hoc, encryption key PMK, as shown in figure 10. The supplicant PAE 30 sends (step 329) authentication challenge auth2 to the authenticator PAE 32 in an EAP-response frame of type EAP-APSS1, as shown in figure 11. If the authentication challenge is deemed to be invalid, the supplicant PAE 30 sends an empty EAP-response frame to the authenticator PAE 32.

The authenticator PAE 32 translates the message received from the supplicant PAE 30 and sends it to the authentication server PAE 34 (step 331). Since both authenticator PAE 32 and authentication server 34 PAE are located on node B 103, this message again comprises an internal message within node B 103. The authentication server PAE 34 then checks the validity of the received authentication challenge auth2 (step 333).

If the authentication server PAE 34 does not receive an authentication challenge or the authentication challenge is deemed to be invalid, it sends back a response to the authenticator PAE 32 which translates the response and sends it on to the supplicant PAE 30 in an EAP-failure message, as described above in relation to steps 311 and 313.

If, on the other hand, the authenticator PAE 32 receives an EAP-response message containing an authentication challenge it checks the validity of the authentication challenge. It will be remembered that authentication challenge auth2 contains random number R2. The presence of random number R2 proves to node B 103 that node A 101 was able to decrypt authentication challenge auth1 and therefore that node A 101 has possession of encryption key PMK.

The authentication server PAE 34 sends back a response (step 335) to the authenticator PAE 32 based on the validity of the authentication challenge and the authenticator PAE 32 translates the response and sends an EAP-Success frame to the supplicant PAE 30 (step 337).

At this stage, node A 101 and node B 103 have established a symmetric, ad-hoc, encryption key PMK that could be used to encrypt communications that they exchange in an ad-hoc communications session. However, encryption key PMK is also known to authentication server 109 and therefore in preferred embodiments, receipt of the EAP-success message triggers a further process whereby encryption key PMK is used to calculate another encryption key (PTK (Pairwise Transient Key in IEEE 802.11 terminology)) that will be known only to node A 101 and node B 103. This is accomplished using the four-way handshake (step 339) that is described in IEEE 802.11i.

Encryption key PTK (or part of it) is the session key and is used to encrypt all 802.11 data frames between the two nodes when they communicate with each other in ad-hoc mode.

It will be apparent from the foregoing description that many modifications or variations may be made to the above described embodiments without departing from the invention. Such modifications and variations include:

In the above described embodiment, the EAP methods made use of the Otway-Rees key establishment protocol. However, someone skilled in the art will realise that in alternative embodiments, the EAP methods could make use of any key establishment protocol (e.g. Kerberos as described in *"The Kerberos Network Authentication Service (V5), Request for Comment (RFC) 4120 of the Internet Engineering Task Force"*).

As an example, an embodiment with EAP methods based on Kerberos may work as follows: node A 101 starts a communication with node B 103 by establishing a link layer connection. Node B 103 then commences authentication by starting up a first instance of EAP of a new type EAP-Kerberos1. Node A 101 responds to this by establishing another link layer connection with access point 105 and subsequently starts up a second instance of EAP. This second instance of EAP is of a further new type, EAP-Kerberos2. Node A 101 then obtains the symmetric key messages from authentication server 109 and, when the second instance of EAP finishes successfully, resumes the first instance of EAP-Kerberos1 with node B 103. Thus authentication server 109 only authenticates node A 101 (as it does according to the Kerberos protocol referenced above).

In the above described embodiment, node A 101 and node B 103 comprised WiFi enabled devices and wireless link layer connectivity between node A 101 and node B 103 was achieved over WiFi. However, someone skilled in the art will realise that any link layer protocol that supports ad-hoc operation and that supports EAP authentication would be suitable instead of WiFi.

In the above described embodiment, node B 103 comprised a WiFi enabled device and wireless link layer connectivity between node B 103 and access point 105 was achieved over WiFi. However, someone skilled in the art will realise that any link layer protocol that supports operation in infrastructure mode and that supports EAP authentication would be suitable instead of WiFi.

In the above described embodiment, it was assumed that node A 101 and node B 103 independently established prior trust with the same authentication server 109 by registering with the same network provider.

In alternative embodiments, node A 101 and node B 103 may have both independently registered with the same network provider but this network provider is a different network provider than the network provider of access point 105. In such embodiments, a roaming agreement and a secure connection has to be in place between the authentication server of access point 105 and authentication server 109 of node A 101 and node B 103. The authentication server of access point 105 acts as a proxy for authentication server 109 of node A 101 and node B 103.

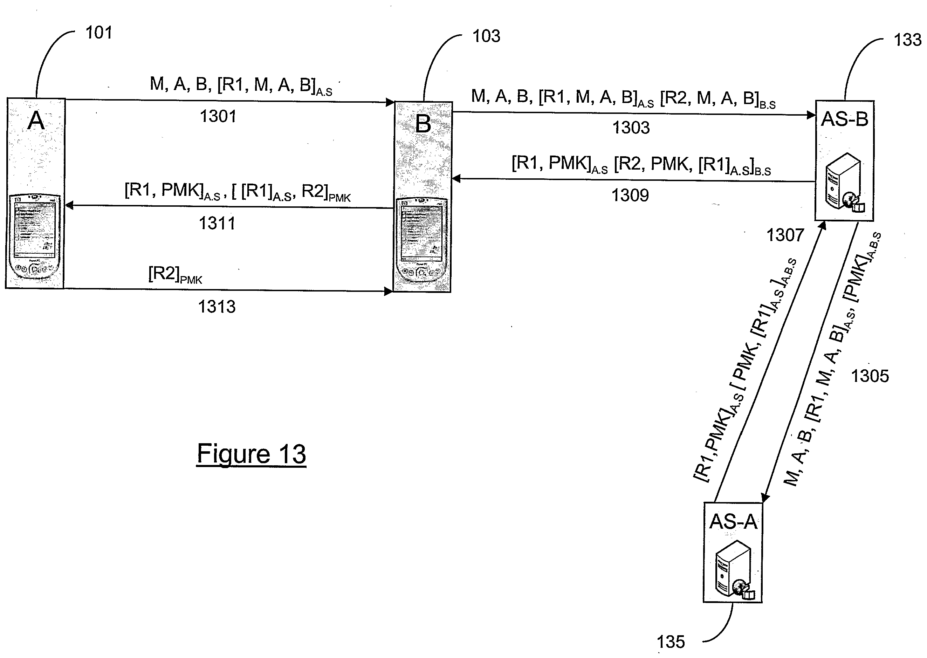

In other embodiments, node A 101 and node B 103 may have registered with different network providers, which are served by different authentication servers. In such embodiments, a roaming agreement and secure connection is again required between the two authentication servers of the two network providers (say AS-A and AS-B). However, an additional message exchange is necessary between the two authentication servers (because AS-B is not able to validate node A 101 and encrypt the session key for node A 101 and vice versa). The details of this additional message exchange are briefly described in relation to figure 13.

In a first step (step 1301), node A 101 sends a request message to node B 103, the content of the message being the same as that described above in relation to figure 5. Node B 103 creates a further request message and forwards this message to its network provider's authentication server AS-B 133 (step 1303), the content of this message being similar to that described above in relation to figure 6. Authentication server AS-B 133, (having authenticated node B 103 using secret B.S that it shares with node B 103) creates the symmetric encryption key PMK and sends (step 1305) the request message of node A 101 together with the encryption key PMK itself encrypted with a secret A.B.S shared by authentication server AS-A 131 and authentication server AS-B 133 (as a result of the roaming agreement between the two authentication servers) to the authentication server AS-A 131 of the network provider of node A 101. Once authentication server AS-A 101 has authenticated node A 101 (using secret A.S that it shares with node A 101) it creates key message key1 (which is the same as key message key1 as described above) and sends it together with a further key message to authentication server AS-B 133 (step 1307). This further key message comprises a cipher text of encryption key PMK, random number R1 encrypted with secret A.S, the cipher text being encrypted with secret A.B.S. Authentication server AS-B 133 decrypts this further key message and then creates a key message key2 for node B 103, which comprises a cipher text of random number R1 encrypted with secret A.S, encryption key PMK and random number R2, the cipher text being encrypted with secret B.S. Then, authentication server AS-B 133 sends key message key2 to node B 103 (step 1309). Node B 103 decrypts key message key2, creates authentication challenge auth1 and sends it together with key message key1 to node A 101 (step 1311). Authentication challenge auth1 comprises a cipher text of random number R2 and random number R1 encrypted with secret A.S, the cipher text being encrypted with encryption key PMK. Node A 101 decrypts key message key1, checks the validity of authentication challenge auth1 and if it is valid, creates authentication challenge auth2 (which is the same as authentication challenge auth2 as described above in relation to figures 10 and 11) and sends it to node B 103 (step 1313). Node A 101 and node B 103 have established a symmetric, ad-hoc, encryption key PMK that could be used to encrypt communications that they exchange in an ad-hoc communications session. A further encryption key PTK could then be established in the same way as described above.

## Claims

1. A method of establishing direct and secure communication between two wireless communications devices (101,103), each of said wireless communications devices (101,103) being capable of both direct and fixed network-infrastructure-mediated communication, and having a trust relationship with an authentication server, said method comprising the steps of:
(i) sending a communication request message directly from a first wireless communications device (101,103) to a second wireless communications device;
(ii) operating one of said wireless communications devices (101,103) to request a symmetric encryption key (PMK) from an authentication server (109, 133);
(iii) responsive to said request, operating said authentication server (109,133) to:
authenticate said one of said wireless communications devices on the basis of said trust relationship;
generate said symmetric encryption key (PMK) on successful authentication of said one of said wireless communications devices (101,103) ; and
send said symmetric encryption key (PMK) to said one of said wireless communications devices (101,103);
(iv) responsive to receiving said symmetric encryption key (PMK), storing said symmetric encryption key (PMK) at said one of said wireless communications devices (101,103) and communicating it directly to the other wireless communications device (101,103);
(v) securing direct communications between said wireless communications devices (101,103) using said symmetric encryption key (PMK);
said method being **characterised by** said authentication server being a network authentication server (109,133) operable to permit or deny use of said fixed network infrastructure on the basis of said trust relationship.

2. A method according to claim 1, wherein said one of said wireless communications devices (101,103) comprises said second wireless communications device (101,103); and wherein step (iii) additionally comprises operating said network authentication server (109,133) to authenticate said first and second wireless communications devices (101,103) and to generate said symmetric encryption key (PMK) on successful authentication of said first and second wireless communications devices (101,103).

3. A method according to claim 2, wherein said trust relationships are established by said first wireless communications device (101,103) sharing a first secret (A.S,B.S) with an authentication server (109,133) and said second wireless device sharing a second secret (A.S,B.S) with said network authentication server (109,133), and wherein said communication request message includes first data encrypted with said first secret (A.S,B.S), and wherein step (ii) comprises sending data encrypted with said second secret (A.S,B.S) together with said encrypted first data to said network authentication server (109,133), and further comprising said network authentication server (109,133) authenticating said first and second wireless devices by decrypting said encrypted first and second data using said first and second shared secrets (A.S,B.S) respectively.

4. A method according claims 2 or 3, wherein said second wireless communications device (101,103) has a trust relationship with said network authentication server (109,133) and said first wireless communications device (101,103) has a trust relationship with a further authentication server (109,133); and wherein said authenticating step comprises said network authentication server (109,133) and said further authentication server (109,133) authenticating said second wireless communications device (101,103) and said first wireless communications device (101,103) respectively on the basis of said trust relationships.

5. A method according to claim 1, wherein said one of said wireless communications devices (101,103) comprises said first wireless communications device (101,103).

6. A method according to any preceding claim, wherein said first and second wireless communications devices (101,103) comprise WiFi enabled communications terminals (101,103).

7. A method according to any preceding claim, wherein said network authentication server (109,133) is operable to authenticate access to said fixed network infrastructure via a wireless access point (105), said method further comprising said second wireless communications device (101,103) accessing said network authentication server (109,133) via said wireless access point (105).

8. A method according to any preceding claim, wherein said first and second wireless communications devices (101,103) each have a trust relationship with the same authentication server (109,133).

9. A method according to any preceding claim, further comprising using said symmetric encryption key (PMK) to derive a further encryption key (PTK) and using said further encryption key (PTK) to secure direct communications between said first and second wireless communications devices (101,103).

10. A method according to any preceding claim, wherein said network authentication server (109,133) comprises a home authentication server (109,133) and said second wireless communications device (101,103) accesses said home authentication server (109,133) via a visited authentication server (109,133).

## Patentansprüche

1. Verfahren zum Herstellen direkter und sicherer Kommunikation zwischen zwei drahtlosen Kommunikationsvorrichtungen (101, 103), wobei jede der drahtlosen Kommunikationsvorrichtungen (101, 103) sowohl zu einer direkten als auch zu einer festnetzwerkinfrastrukturvermittelten Kommunikation fähig ist und eine Vertrauensbeziehung mit einem Authentisierungsserver aufweist, wobei das Verfahren die folgenden Schritte umfasst:
(i) Senden einer Kommunikationsanforderungsnachricht direkt von einer ersten drahtlosen Kommunikationsvorrichtung (101, 103) an eine zweite drahtlose Kommunikationsvorrichtung;
(ii) Betreiben einer der drahtlosen Kommunikationsvorrichtungen (101, 103) zum Anfordern eines Schlüssels für symmetrische Verschlüsselung (PMK) von einem Authentisierungsserver (109, 133);
(iii) als Reaktion auf die Anforderung, Betreiben des Authentisierungsservers (109, 133) zum:
Authentisieren der einen der drahtlosen Kommunikationsvorrichtungen auf Grundlage der Vertrauensbeziehung;
Erzeugen des Schlüssels für symmetrische Verschlüsselung (PMK) bei erfolgreicher Authentifizierung der einen der drahtlosen Kommunikationsvorrichtungen (101, 103); und
Senden des Schlüssels für symmetrische Verschlüsselung (PMK) an die eine der drahtlosen Kommunikationsvorrichtungen (101, 103) ;
(iv) als Reaktion auf das Empfangen des Schlüssels für symmetrische Verschlüsselung (PMK), Speichern des Schlüssels für symmetrische Verschlüsselung (PMK) in der einen der drahtlosen Kommunikationsvorrichtungen (101, 103) und Kommunizieren von diesem direkt an die andere drahtlose Kommunikationsvorrichtung (101, 103);
(v) Sichern direkter Kommunikation zwischen den drahtlosen Kommunikationsvorrichtungen (101, 103) unter Verwendung des Schlüssels für symmetrische Verschlüsselung (PMK);
wobei das Verfahren **dadurch gekennzeichnet ist, dass** der Authentisierungsserver ein Netzwerk-Authentisierungsserver (109, 133) ist, der betreibbar ist zum Erlauben oder Verweigern einer Nutzung der Festnetzwerkinfrastruktur auf Grundlage der Vertrauensbeziehung.

2. Verfahren nach Anspruch 1, wobei die eine der drahtlosen Kommunikationsvorrichtungen (101, 103) die zweite drahtlose Kommunikationsvorrichtung (101, 103) umfasst; und wobei der Schritt (iii) zusätzlich Betreiben des Netzwerk-Authentisierungsservers (109, 133) zum Authentisieren der ersten und der zweiten drahtlosen Kommunikationsvorrichtung (101, 103) und zum Erzeugen des Schlüssels für symmetrische Verschlüsselung (PMK) bei erfolgreicher Authentisierung der ersten und der zweiten drahtlosen Kommunikationsvorrichtung (101, 103) umfasst.

3. Verfahren nach Anspruch 2, wobei die Vertrauensbeziehungen dadurch hergestellt werden, dass die erste drahtlose Kommunikationsvorrichtung (101, 103) ein erstes Geheimnis (A.S, B.S) mit einem Authentisierungsserver (109, 133) teilt und dass die zweite drahtlose Vorrichtung ein zweites Geheimnis (A.S, B.S) mit dem Netzwerk-Authentisierungsserver (109, 133) teilt, und wobei die Kommunikationsanforderungsnachricht mit dem ersten Geheimnis (A.S, B.S) verschlüsselte erste Daten enthält und wobei der Schritt (ii) Senden von mit dem zweiten Geheimnis (A.S, B.S) verschlüsselten Daten zusammen mit den verschlüsselten ersten Daten an den Netzwerk-Authentisierungsserver (109, 133) umfasst, und ferner umfasst, dass der Netzwerk-Authentisierungsserver (109, 133) die erste und die zweite drahtlose Vorrichtung jeweils durch Entschlüsseln der verschlüsselten ersten und zweiten Daten unter Verwendung des ersten und des zweiten geteilten Geheimnisses (A.S, B.S) authentisiert.

4. Verfahren nach Ansprüchen 2 oder 3, wobei die zweite drahtlose Kommunikationsvorrichtung (101, 103) eine Vertrauensbeziehung mit dem Netzwerk-Authentisierungsserver (109, 133) aufweist und die erste drahtlose Kommunikationsvorrichtung (101, 103) eine Vertrauensbeziehung mit einem weiteren Authentisierungsserver (109, 133) aufweist; und wobei der Authentisierungsschritt umfasst, dass der Netzwerk-Authentisierungsserver (109, 133) und der weitere Authentisierungsserver (109, 133) die zweite drahtlose Kommunikationsvorrichtung (101, 103) und die erste drahtlose Kommunikationsvorrichtung (101, 103) jeweils auf der Grundlage der Vertrauensbeziehungen authentisieren.

5. Verfahren nach Anspruch 1, wobei die eine der drahtlosen Kommunikationsvorrichtungen (101, 103) die erste drahtlose Kommunikationsvorrichtung (101, 103) umfasst.

6. Verfahren nach einem vorhergehenden Anspruch, wobei die erste und die zweite drahtlose Kommunikationsvorrichtung (101, 103) WiFi-befähigte Kommunikationsendgeräte (101, 103) umfassen.

7. Verfahren nach einem vorhergehenden Anspruch, wobei der Netzwerk-Authentisierungsserver (109, 133) betreibbar ist zum Authentisieren eines Zugangs zu der Festnetzwerkinfrastruktur über einen drahtlosen Zugangspunkt (105), wobei das Verfahren ferner umfasst, dass die zweite drahtlose Kommunikationsvorrichtung (101, 103) über den drahtlosen Zugangspunkt (105) auf den Netzwerk-Authentisierungsserver (109, 133) zugreift.

8. Verfahren nach einem vorhergehenden Anspruch, wobei die erste und die zweite drahtlose Kommunikationsvorrichtung (101, 103) jeweils eine Vertrauensbeziehung mit demselben Authentisierungsserver (109, 133) aufweisen.

9. Verfahren nach einem vorhergehenden Anspruch, ferner umfassend Verwenden des Schlüssels für symmetrische Verschlüsselung (PMK) zum Ableiten eines weiteren Verschlüsselungsschlüssels (PTK) und Verwenden des weiteren Verschlüsselungsschlüssels (PTK) zum Sichern von direkter Kommunikation zwischen der ersten und der zweiten drahtlosen Kommunikationsvorrichtung (101, 103).

10. Verfahren nach einem vorhergehenden Anspruch, wobei der Netzwerk-Authentisierungsserver (109, 133) einen Heim-Authentisierungsserver (109, 133) umfasst und die zweite drahtlose Kommunikationsvorrichtung (101, 103) über einen Besucher-Authentisierungsserver (109, 133) auf den Heim-Authentisierungsserver (109, 133) zugreift.

## Revendications

1. Procédé pour établir une communication directe et sécurisée entre deux dispositifs de communication sans fil (101, 103), chacun desdits dispositifs de communication sans fil (101, 103) étant compatible à la fois avec une communication directe et une communication par infrastructure de réseau fixe, et ayant une relation de confiance avec un serveur d'authentification, ledit procédé comprenant les étapes suivantes :
(i) envoyer un message de demande de communication directement d'un premier dispositif de communication sans fil (101, 103) à un second dispositif de communication sans fil ;
(ii) faire fonctionner l'un desdits dispositifs de communication sans fil (101, 103) pour demander une clé de chiffrement symétrique (PMK) à un serveur d'authentification (109, 133) ;
(iii) en réponse à ladite demande, faire fonctionner ledit serveur d'authentification (109, 133) pour :
authentifier ledit un desdits dispositifs de communication sans fil sur la base de ladite relation de confiance ;
générer ladite clé de chiffrement symétrique (PMK) lors de l'authentification réussie dudit un desdits dispositifs de communication sans fil (101, 103) ; et
envoyer ladite clé de chiffrement symétrique (PMK) audit un desdits dispositifs de communication sans fil (101, 103) ;
(iv) en réponse à la réception de ladite clé de chiffrement symétrique (PMK), stocker ladite clé de chiffrement symétrique (PMK) sur ledit un desdits dispositifs de communication sans fil (101, 103) et la communiquer directement à l'autre dispositif de communication sans fil (101, 103) ;
(v) sécuriser des communications directes entre lesdits dispositifs de communication sans fil (101, 103) en utilisant ladite clé de chiffrement symétrique (PMK) ; ledit procédé étant **caractérisé en ce que** ledit serveur d'authentification est un serveur d'authentification de réseau (109, 133) pouvant fonctionner pour permettre ou refuser l'utilisation de ladite infrastructure de réseau fixe sur la base de ladite relation de confiance.

2. Procédé selon la revendication 1, dans lequel ledit un desdits dispositifs de communication sans fil (101, 103) comprend ledit second dispositif de communication sans fil (101, 103) ; et dans lequel l'étape (iii) comprend en outre de faire fonctionner ledit serveur d'authentification de réseau (109, 133) pour authentifier lesdits premier et second dispositifs de communication sans fil (101, 103) et pour générer ladite clé de chiffrement symétrique (PMK) lors de l'authentification réussie desdits premier et second dispositifs de communication sans fil (101, 103).

3. Procédé selon la revendication 2, dans lequel lesdites relations de confiance sont établies par le partage, par ledit premier dispositif de communication sans fil (101, 103), d'un premier secret (A.S, B.S) avec un serveur d'authentification (109, 133) et par le partage, par ledit second dispositif sans fil, d'un second secret (A.S, B.S) avec ledit serveur d'authentification de réseau (109, 133), et où ledit message de demande de communication inclut des premières données chiffrées avec ledit premier secret (A.S, B.S), et où l'étape (ii) comprend d'envoyer des données chiffrées avec ledit second secret (A.S, B.S) conjointement avec lesdites premières données chiffrées audit serveur d'authentification de réseau (109, 133), et comprend en outre que ledit serveur d'authentification de réseau (109, 133) authentifie lesdits premier et second dispositifs sans fil en déchiffrant lesdites premières et secondes données chiffrées en utilisant respectivement lesdits premier et second secrets partagés (A.S, B.S).

4. Procédé selon la revendication 2 ou la revendication 3, dans lequel ledit second dispositif de communication sans fil (101, 103) a une relation de confiance avec ledit serveur d'authentification de réseau (109, 133), et ledit premier dispositif de communication sans fil (101, 103) a une relation de confiance avec un autre serveur d'authentification (109, 133) ; et où ladite étape d'authentification comprend que ledit serveur d'authentification de réseau (109, 133) et ledit autre serveur d'authentification (109, 133) authentifient ledit second dispositif de communication sans fil (101, 103) et ledit premier dispositif de communication sans fil (101, 103), respectivement, sur la base desdites relations de confiance.

5. Procédé selon la revendication 1, dans lequel ledit un desdits dispositifs de communication sans fil (101, 103) comprend ledit premier dispositif de communication sans fil (101, 103).

6. Procédé selon l'une quelconque des revendications précédentes, dans lequel lesdits premier et second dispositifs de communication sans fil (101, 103) comprennent des terminaux de communication WiFi (101, 103) .

7. Procédé selon l'une quelconque des revendications précédentes, dans lequel ledit serveur d'authentification de réseau (109, 133) peut être utilisé pour authentifier l'accès à ladite infrastructure de réseau fixe par l'intermédiaire d'un point d'accès sans fil (105), ledit procédé comprenant en outre que ledit second dispositif de communication sans fil (101, 103) accède audit serveur d'authentification de réseau (109, 133) par l'intermédiaire dudit point d'accès sans fil (105).

8. Procédé selon l'une quelconque des revendications précédentes, dans lequel lesdits premier et second dispositifs de communication sans fil (101, 103) ont chacun une relation de confiance avec le même serveur d'authentification (109, 133).

9. Procédé selon l'une quelconque des revendications précédentes, comprenant en outre d'utiliser ladite clé de chiffrement symétrique (PMK) pour dériver une autre clé de chiffrement (PTK), et d'utiliser ladite autre clé de chiffrement (PTK) pour sécuriser les communications directes entre lesdits premier et second dispositifs de communication sans fil (101, 103).

10. Procédé selon l'une quelconque des revendications précédentes, dans lequel ledit serveur d'authentification de réseau (109, 133) comprend un serveur d'authentification domestique (109, 133) et ledit second dispositif de communication sans fil (101, 103) accède audit serveur d'authentification domestique (109, 133) par l'intermédiaire d'un serveur d'authentification visité (109, 133).
